# EUROPEAN PATENT SPECIFICATION

(11) **EP 3 155 272 B1**
(45) Date of publication and mention of the grant of the patent: **15.12.2021**
(21) Application number: 15805869.3
(22) Date of filing: 10.06.2015
(51) Int. Cl.: F16B 15/02, F16B 35/06, B21K 1/46, F16B 15/06, F16B 5/06, F16B 43/02

(54) **ENLARGED HEAD FASTENER DEVICE**
BEFESTIGUNGSVORRICHTUNG MIT VERGRÖSSERTEM KOPF
DISPOSITIF DE FIXATION À TÊTE AGRANDIE

(30) Priority: 10.06.2014 US 201462010163 P; 27.01.2015 US 201562108259 P
(43) Date of publication of application: 19.04.2017
(73) Proprietor: Sr Systems, LLC, Tuscaloosa, Alabama 35406 (US)
(72) Inventor: WALWORTH, Van T., Lebanon, Tennessee 37087 (US); ZIMMERMAN, Steve, Linden, Alabama 36748 (US); DRUMMOND, Scott, Tuscaloosa, Alabama 35406 (US)
(74) Representative: Stuttard, Garry Philip
(86) International application number: PCT/US2015/035190
(87) International publication number: WO 2015/191772

(56) References cited:
- CN-Y- 2 508 041
- GB-A- 818 246
- JP-A- 2010 116 949
- US-A- 2 093 610
- US-A- 2 557 370
- US-A- 5 039 262
- US-A- 5 069 589
- US-A- 5 516 248
- US-A- 5 622 464
- US-A1- 2007 224 020
- US-A1- 2007 224 020
- US-A1- 2010 183 403
- US-A1- 2010 183 403

## Description

The present invention relates to an enlarged head fastener device. By way of example and without limitation, such fasteners may be used in the construction industry for securing multiple building components to one another.

This section provides background information related to the present invention and is not necessarily prior art.

Nail-like fasteners have been used for thousands of years. Some archeological evidence suggests that nail-like fasteners may have been used in Mesopotamia as long ago as 3500 B.C. Early nails were forged or shaped with hammers. Several millennia later in the 1500s A.D. machines were developed to produce a "cut-nail" fastener from a strip of iron. Not until the mid-1800s were machines and methods developed to produce nail-like fasteners made from metal wire. Most nail-like fasteners of the present day are still produced by machines, methods, and techniques that utilize a metal wire forming process.

At the beginning of the American Revolution, England held the distinction of being the world's leading producer of nails. At that time, there was essentially no nail production taking place in the American Colonies on a commercial scale. As a result many Colonial households setup a simple nail manufacturing process in their homes using home fires as a manufacturing tool. Colonist made nails for their own use as well as for bartering for other goods and services. The first wide spread manufacture of wire nails in the USA was in 1877-1879 using iron wire from Norway. Wire nails had been used in Norway for many years prior to their introduction to the USA construction market. Testing as early as the year 1884, conducted by the Watertown Arsenal, in Watertown, Massachusetts, revealed that cut-nails had superior withdrawal resistance compared to iron wire nails. However, because the wire nails could be produced at significantly lower cost than cut-nails, the construction industry gravitated to wire nails and away from cut-nails. Now, over 130 years later, there are over 2,000 varieties of nail-like fasteners being produced in modern times.

Nail-like fasteners are used for many purposes and are designed for use in many types of materials and/or applications. One application is in the wood frame construction industry, where nail-like fasteners are utilized to fasten wood and/or wood-like materials together. In general, the construction industry has many applications for residential and/or commercial structures using structural substrate components made of wood and/or wood-like materials. The wood and/or wood-like substrate materials receive fastener devices that are applied to restrain and/or couple the wood and/or wood-like substrate materials to one another and to other construction components. Typical fasteners such as nails, screws, and bolts generally include a longitudinally extending shank and a head that extends radially outwardly from the end of the shank.

Many standard nails are loose, which facilitate being driven by hand while many other nails are collated or coiled in some fashion to facilitate use with a powered delivery system. In a similar fashion, screws are available for application by hand and/or powered delivery systems. Typically, bolted fasteners are manually installed while final torque is either applied manually or with the assistance of a powered system. There are many features applied to the shanks of nails, screws, and bolts to assist the retention and holding strength of the fastener. Some features that have been applied to the shank of nail-like fasteners include special coatings, spiral twisting, ring shanks, knurls, barbs, ribs, and splines, just to name a few. Some nail-like and/or screw-like fasteners combine multiple shank features on the same shank. In similar fashion, screw-like and bolt-like shanks feature many different kinds of thread patterns, continuous threads, discontinuous threads, single flutes, multiple flutes, special coatings, and combinations of thread patterns on the same shank, just to name a few. Even though many variations exist, the heads of most fasteners used in residential and commercial construction to connect and/or restrain wood and/or wood like materials are relatively small in size. Furthermore, the heads of most typical fasteners are designed and manufactured in such a way that they cut and/or rupture surface fibers of the substrate material.

When a typical fastener is installed in a typical wood and/or wood-like substrate material, a tug-a-war of sorts results between the substrate material and the fastener. For instance, a typical plywood roof decking substrate material of a typical wood frame construction is fastened to a wood rafter framing substrate material using a nail. In many regions near coastal areas prone to high wind storms, building codes require at least an 8d nail applied in a prescribed pattern and spacing in order to achieve a safe working load design. The tug-a-war in this scenario plays out during a high wind storm as the roof decking substrate material is challenged to come off and separate from the wood rafter framing substrate material. Effectively, the only thing holding the roof decking substrate material together with the wood rafter substrate material are the nails. The nail shanks are challenged to not withdraw from the wood rafter substrate material while at the same time the nail head is challenged to not pull-through the roof decking substrate material.

The weakest link in the pull-through withdrawal tug-of-war will fail first such that one of three failure modes results. In the first failure mode, the nail shank will withdraw from the wood rafter substrate material so that the nail head remains embedded in the roof decking substrate material (i.e. the roof decking substrate material lifts off the wood rafter substrate material taking the nails with it.) In the second failure mode, the nail head will pull-through the roof decking substrate material and the nail shank will remain embedded in the wood rafter substrate (i.e. the roof decking substrate material lifts off the wood rafter substrate material while the nails remain in the wood rafter substrate material). A third failure mode, less common than the first and second failure modes, is fastener failure, where the nail head or the shank fails due to breakage, bending, or shearing. When any one of these three failure modes occur, the wood roof decking substrate material comes off resulting in the building suffering extensive damage and property loss.

Independent third party lab testing conducted by NTA, Inc. has demonstrated that commonly used nails lose as much as half of their initial withdrawal resistance within two days of being driven in place. Then after about a month later, the wood fibers of the substrate material will cooperate with the nail to slightly increase its withdrawal resistance, though the final withdrawal resistance will still be significantly less than the initial resistance.

Shank features such as barbs, ring shanks, spirals, and flutes have been shown to lose significant withdrawal resistance when the substrate material is subjected to environmental conditions, which causes the dry shrinking of wood substrate fibers over long periods of time. In addition, shank features such as barbs, ring shanks, spirals, and flutes have been shown to lose significant withdrawal resistance when the nail and substrate material are subjected to vibration, which may be created by storm winds beating upon a structure, seismic activity generated by tornadoes beating the ground as they travel, and seismic activity associated with earth quakes and ground shifting.

Examples of nail-like fasteners include those disclosed in U.S. Patent No. 387,380 entitled "Flat Pointed Nail or Tack," which issued to J.F. Thayer on August 7, 1888, U.S. Patent No. 2,093,610 entitled "Nail," which issued to S. Kraemer on September 21, 1937, and U.S. Patent No. 4,932,820 entitled "Nail With Differential Holding Capabilities Along Its Shank," which issued to Schniedermeier on June 12, 1990. One short coming of the fasteners described in these patents is that the heads can easily cut and/or rupture the surface fibers of the wood and/or wood-like substrate material. Another significant shortcoming of fasteners of this type is that the pull-through resistance of the fastener does not increase proportionally with an increase in the thickness of the substrate material. Independent third party testing by NTA, Inc. reveals that as the thickness of the substrate material increases, the pull-through resistance of such fasteners increases to a lesser extent.

Some people in the construction industry have improvised and resorted to using a flat washer under the head of the fastener to enlarge the effective bearing surface of the fastener. While using a washer-type device does increase the bearing surface, it also increases the relative thickness of the head of the fastener causing it to protrude above the surface of the substrate material. If the fastener and washer combination is driven in to be flush with the surface of the substrate material, then the substrate material can often be cut, compromised, and/or damaged such that it is easily susceptible to further deformation and subsequent loss of structural integrity.

Examples of nail-like fasteners used in combination with a washer-like device include U.S. Patent No. 2,256,401 entitled "Fastener," which issued to H. Maze on September 16, 1941, U.S. Patent No. 4,860,513 entitled "Roofing Fastener," which issued to Whitman on August 29, 1989, and U.S. Patent No. 4,884,932 entitled "Decking Insulation Fastener," which issued to Meyer on December 5, 1989. US2557370A discloses a nail and an insulating member which is positioned between the nail head and a support (such as a fencepost). A short coming of the fasteners disclosed in these patents includes that the washer-like devices are not designed to prevent cutting and/or rupturing the surface fibers of the wood and/or wood-like material substrate. Similar to the way a nail head ruptures the surface fibers of the wood substrate, the washer-like device does so as well, but at a larger diameter than the nail head diameter.

Others have developed nails with enlarged heads to increase the effective bearing surface of the fastener. For example, U.S. Patent No. 6,758,018 entitled "Power Driven Nails For Sheathing Having Enlarged Diameter Heads For Enhanced Retention And Method," which issued to Sutt, Jr. on July 6, 2004, discloses a fastener with an enlarged head requiring a specific ratio between the size of the head and the size of the shank. The enlarged head specified by this ratio results in increased pull-through resistance compared to commonly used nails. Fasteners available in the marketplace under the brand name "Hurriquake" are a derivative of this patent. Testing reveals that fasteners of this type do exhibit increased pull-through resistance compared to fasteners having a smaller tradition sized head. However, one of the shortcomings of this design is that the geometric features of the nail head are relatively flat and planar, with sharp edges along the underside of the head. The benefit of the enlarged head size compared to the shank of the fastener is limited because of the inherent detrimental benefits of the geometric shape of the head design. Specifically, enlarged head nails have been shown to include several significant failure modes. One failure mode occurs where the surface fibers of the wood substrate material become ruptured and split from the initial setting of the nail before pull-through forces are applied due to the sharp edges on the underside of the head. Another failure mode occurs where the enlarged heads of the nails become noticeably distorted and wobbled after pulling through the substrate material, resembling an umbrella turned inside out as a result of strong winds. Yet another significant shortcoming observed in the testing was that the corresponding pull-through resistance of the nails tested in various thicknesses of substrates materials was not equivalent to the increased thickness of the substrate. In other words, in spite of the enlarged head, independent third party testing reveals that as the thickness of the substrate material increases, there is not a corresponding increase in the pull-through resistance for nails of this design. Another disadvantage associated with such enlarged head fasteners lies with the manufacturing process for such fasteners. After the metal wire forming the shank of the fastener has been clamped by opposing die halves, multiple hammer strikes are required in order to form the enlarged head of the fastener due to its size. In other words, the diameter of the head after a first hammer strike is insufficient and one or more additional hammer strikes are required to continue to push the material of the wire outward to form the enlarged head. This increases manufacturing costs by slowing down the yield of the manufacturing process.

GB-A-818246 discloses an enlarged head fastener device.

Accordingly, there remains a need for an improved fastener head design that increases pull-through resistance of nail-like fasteners.

In accordance with the present invention there is provided an enlarged head fastener device having a nail-like arrangement, comprising:
a shank extending along a shank axis and between a first end and a second end, said shank having an exterior surface that extends between said first end and said second end of said shank;
a tip disposed at the first end of the shank;
a head disposed at said second end of said shank, said head extending outwardly from said second end of said shank in a transverse plane that is substantially perpendicular to said shank axis to define a head periphery, said head having an anterior side adjacent said second end of said shank and a posterior side opposite said anterior side, and
at least one ridge formation disposed on and projecting from said anterior side of said head for reinforcing said head, said at least one ridge formation extending continuously between an outboard end positioned on said anterior side of said head adjacent said head periphery and an inboard end that is closer to said second end of said shank than said outboard end,
   characterized in that the inboard end is positioned on the exterior surface of the shank at a location adjacent the second end of said shank,
   said anterior side of said head includes a bearing surface and a convergent transition portion, said bearing surface extending inwardly from an outer radius edge adjacent said head periphery to an inner radius edge, said convergent transition portion extending inwardly from a large end adjacent said inner radius edge of said bearing surface to a small end adjacent said second end of said shank, said convergent transition portion having an outer surface that extends between said large end and said small end, and said at least one ridge formation extending across said outer surface of said convergent transition portion,
   wherein the bearing surface defines a reference plane that is substantially parallel to the transverse plane;
   wherein the shank has a smooth outer surface along its full longitudinal extension from the first end until the inboard end adjacent the second end of said shank.

Advantageously the at least one ridge formation provides additional reinforcement to the head.

A method of manufacturing the enlarged head fastener device described herein includes the step of arranging at least two forming dies in an opposing relationship. Each of the at least two forming dies includes a first die end, a second die end, and a mating surface that extends between the first and second die ends. The mating surfaces of the at least two forming dies oppose one another. The method also includes the steps of arranging a hammer die adjacent the first die ends of the at least two forming dies and providing in each of the at least two forming dies a head forming cavity, a convergent transition portion forming cavity, and a shank forming cavity. More specifically, the head forming cavities are provided along the first die ends, the convergent transition portion forming cavities are provided adjacent the head forming cavities, and the shank forming cavities are provided along the mating surfaces of the at least two forming dies between the convergent transition portion forming cavities and the second die ends. The method further includes the steps of extending a metal wire between the mating surfaces of the at least two forming dies from the second die ends toward the first die ends until an end of the metal wire protrudes from the first die ends and closing the at least two forming dies on the metal wire. In accordance with the closing step, the metal wire is received in the head forming cavity, the convergent transition portion forming cavity, and the shank forming cavity of each of the at least two forming dies. The method additionally includes the steps of hammering the end of the metal wire protruding from the first die ends in a single impact and forcing material from the metal wire to flow out into and fill the head forming cavity and the convergent transition portion forming cavity of each of the at least two forming dies. The single impact in the hammering step occurs between the end of the metal wire and the hammer die when the hammer die is translated (i.e. moved or driven) towards the first die ends of the at least two forming dies. In accordance with the method, the forcing step forms a head and a convergent transition portion of an enlarged head fastener device in response to the hammering step.

Accordingly, the fastener devices described herein and the method for its manufacture provide a number of advantages and overcome the short comings of existing fasteners and associated methods for their production. The fastener head design described herein provides substantially improved retention capabilities combined with superior pull-through resistance compared to small-head fasteners and existing enlarged head fasteners. Both convergent transition portion and the at least one ridge formation reinforce the head of the subject enlarged head fastener device in order to substantially eliminate the failure mode that occurs in other fasteners where the enlarged head is turned inside out like an umbrella after pulling through the substrate material. Because the head of the subject enlarged head fastener device is much less prone to deformation, the pull-through resistance of the disclosed enlarged head fastener device is higher. In addition, the pull-through resistance of the disclosed enlarged head fastener device increases to a greater extent when the thickness of the substrate material is increased. Testing has shown that this level of fastener performance is not achieved by the small-head fasteners or the other enlarged head fasteners described above. Advantageously, the teachings set forth herein can be applied to a wide range of nail-like fasteners.

Other advantages of the present invention will be readily appreciated, as the same becomes better understood by reference to the following detailed description when considered in connection with the accompanying drawings wherein:
Figure 1 is provided for illustrative purposes only and shows a side perspective view of an enlarged head fastener device which does not form part of the invention;
Figure 2 is provided for illustrative purposes only and is a side elevation view of the enlarged head fastener device illustrated in Figure 1;
Figure 3A is provided for illustrative purposes only and is a side elevation view of a portion of the enlarged head fastener device illustrated in Figure 1;
Figure 3B is provided for illustrative purposes only and is a top cross-sectional view of the enlarged head fastener device illustrated in Figure 3A taken along line 3B-3B;
Figure 4 is provided for illustrative purposes only and shows a side elevation view of another enlarged head fastener device that includes a ribbed shank which does not form part of the invention;
Figure 5A is provided for illustrative purposes only and shows a side elevation view of a portion of another enlarged head fastener device that includes a convergent transition portion having a curved outer surface which does not form part of the invention;
Figure 5B is provided for illustrative purposes only and shows a side elevation view of a portion of another enlarged head fastener device that includes a convergent transition portion with one or more teeth which does not form part of the invention;
Figure 6 is a side elevation view of a portion of an exemplary enlarged head fastener device constructed in accordance with the present invention that includes a head with ridge formations disposed on an anterior side of the head;
Figure 7 is a bottom elevation view of the portion of the exemplary enlarged head fastener device illustrated in Figure 6;
Figure 8 is a side cross-sectional view of the portion of the exemplary enlarged head fastener device illustrated in Figure 7 taken along line 8-8;
Figure 9 is a bottom perspective view of the portion of the exemplary enlarged head fastener device illustrated in Figure 6;
Figure 10 is an enlarged bottom perspective view of a portion of the exemplary enlarged head fastener device illustrated in Figure 9 showing one of the ridge formations;
Figure 11 is another enlarged bottom perspective view of a portion of the exemplary enlarged head fastener device illustrated in Figure 9 where a cut-out has been made in the head to illustrate the shape of one of the ridge formations;
Figure 12 is a bottom perspective view of a portion of another exemplary enlarged head fastener device constructed in accordance with the present invention that includes a head with ridge formations that are curved across a bearing surface of the head;
Figure 13 is a bottom elevation view of the exemplary enlarged head fastener device illustrated in Figure 12;
Figure 14 is a side perspective view of the exemplary enlarged head fastener device illustrated in Figure 12 where exemplary enlarged head fastener device is shown embedded in a substrate material;
Figure 15A is provided for illustrative purposes only and shows a side perspective view of another enlarged head fastener device that includes an offset head which does not form part of the invention;
Figure 15B is provided for illustrative purposes only and is a side elevation view of the enlarged head fastener device illustrated in Figure 15A;
Figure 15C is provided for illustrative purposes only and is a top elevation view of the enlarged head fastener device illustrated in Figure 15A looking down at the offset head;
Figure 15D is provided for illustrative purposes only and is a side elevation view of a portion of the enlarged head fastener device illustrated in Figure 15A;
Figure 16A is provided for illustrative purposes only and is a side elevation view of several of the enlarged head fastener devices illustrated in Figure 1 that have been collated as part of a string of fasteners;
Figure 16B is provided for illustrative purposes only and is a top elevation view of the enlarged head fastener devices illustrated in Figure 16A;
Figure 16C is a top elevation view of several of the enlarged head fastener devices illustrated in Figure 15A that have been collated as part of a string of fasteners;
Figure 17 is a plot comparing the ultimate yield pull-through resistance of small-head fasteners and conventional enlarged head fasteners to the ultimate yield pull-through resistance of the enlarged head fastener device shown in Figure 1;
Figure 18 is a flowchart illustrating a method of manufacturing an enlarged head fastener device which may be constructed in accordance with the present invention;
Figure 19 is provided for illustrative purposes only and is a side elevation view of an exemplary die assembly for use in performing the method illustrated in Figure 18;
Figure 20 is provided for illustrative purposes only and is a front perspective view of the exemplary die assembly illustrated in Figure 19;
Figure 21 is a side elevation view of another exemplary die assembly for use in performing the method illustrated in Figure 18;
Figure 22 is provided for illustrative purposes only and is a front elevation view of two forming dies of the exemplary die assembly illustrated in Figure 19; and
Figure 23 is a front elevation view of two forming dies of the exemplary die assembly illustrated in Figure 21.

Referring to the Figures, wherein like numerals indicate corresponding parts throughout the several views, an enlarged head fastener device 20 is illustrated.

Example embodiments will now be described more fully with reference to the accompanying drawings. Example embodiments are provided so that this disclosure will be thorough, and will fully convey the scope to those who are skilled in the art. Numerous specific details are set forth such as examples of specific components, devices, and methods, to provide a thorough understanding of embodiments of the present invention. It will be apparent to those skilled in the art that specific details need not be employed, that example embodiments may be embodied in many different forms and that neither should be construed to limit the scope of the invention. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly. The term "substantially parallel," as used herein, means that the recited elements are exactly parallel or are arranged at an angle ranging between and including plus or minus 5 degrees. The term "substantially perpendicular," as used herein, means that the recited elements are arranged at an angle ranging between and including 85 degrees and 95 degrees.

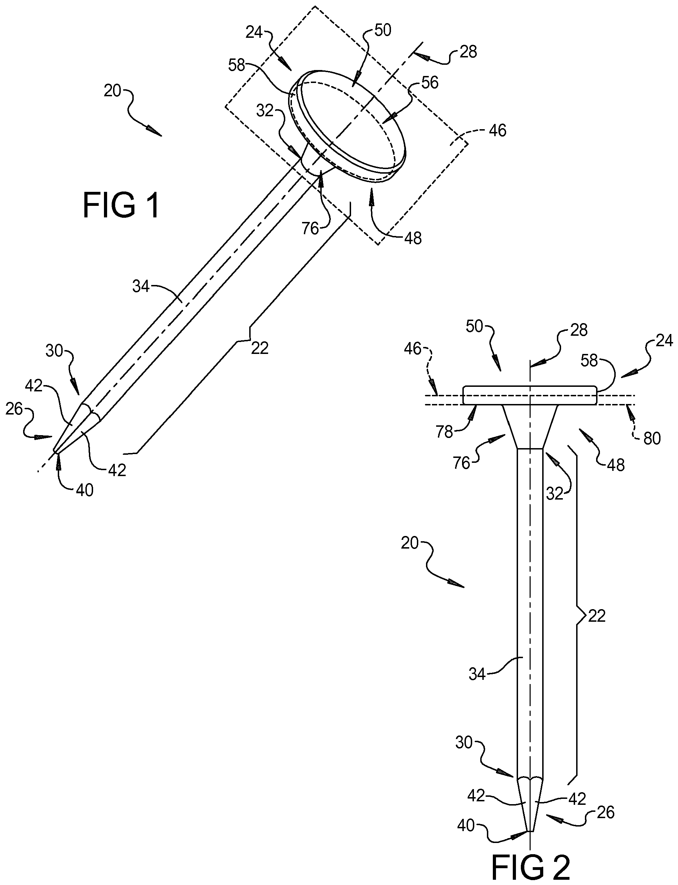

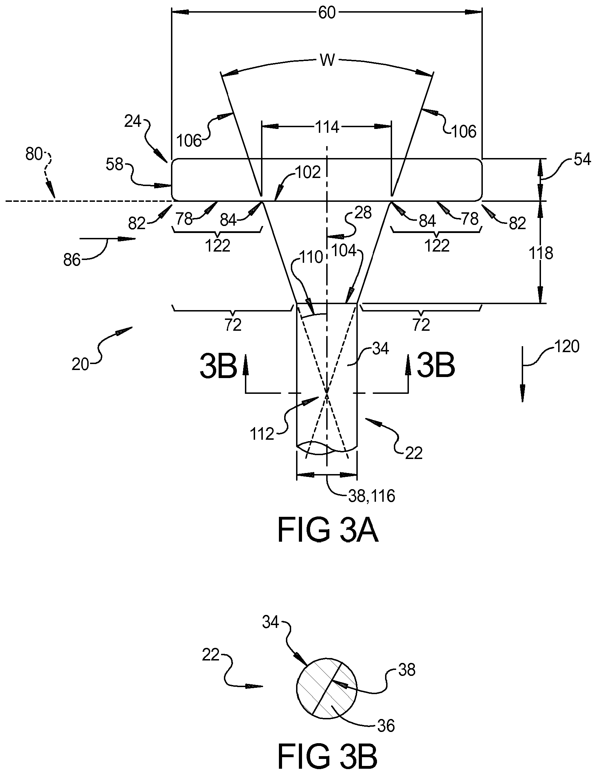

With reference to Figures 1, 2, 3A, and 3B which are provided for illustrative purposes only, an enlarged head fastener device 20 which does not form part of the invention is illustrated in the form of a nail-like arrangement. The enlarged head fastener device **20** includes a shank **22,** a head **24,** and a tip **26.** It should be appreciated that in the examples illustrated, the shank **22,** the tip **26,** and the head **24** are integral with one another forming a one-piece structure. The shank **22** extends linearly along a shank axis **28** and between a first end **30** and a second end **32.** The shank **22** has an exterior surface **34** that generally extends between the first and second ends **30, 32.** Although other shapes are possible, in the examples shown, the exterior surface **34** of the shank **22** has a cylindrical shape. As best seen in Figure 3B, the shank **22** has a shank cross-section **36** that has a circular shape and a shank diameter **38.** It should be appreciated that the shank cross-section **36** extends perpendicularly relative to the shank axis **28.**

The tip **26** is disposed at the first end **30** of the shank **22.** Although a wide variety of different tip configurations may be utilized, in the examples illustrated, the tip **26** tapers from the shank diameter **38** at a location disposed adjacent the first end **30** of the shank **22** to a point **40** at a location that is spaced outwardly from the first end **30.** The tip **26** has at least two angled sides **42.** It should be appreciated that in Figures 1 and 2, only half of the tip **26** is visible and that the examples illustrated therein include a total of four angled sides **42.** The angled sides **42** converge at the point **40** and each of the angled sides **42** is planar in shape. As such, the point **40** of the tip **26** may be disposed along the shank axis **28** (i.e. may be centered relative to the shank cross-section **36).** In alternative configurations, the tip **26** may have a conical shape or may have only one angled side (not shown). Where the tip **26** includes only one angled side, the point **40** may be laterally offset relative to the shank axis **28** (not shown). It should also be appreciated that the shank **22** of the enlarged head fastener device **20** may be provided without a tip **26,** where the shank **22** terminates at the first end **30.**

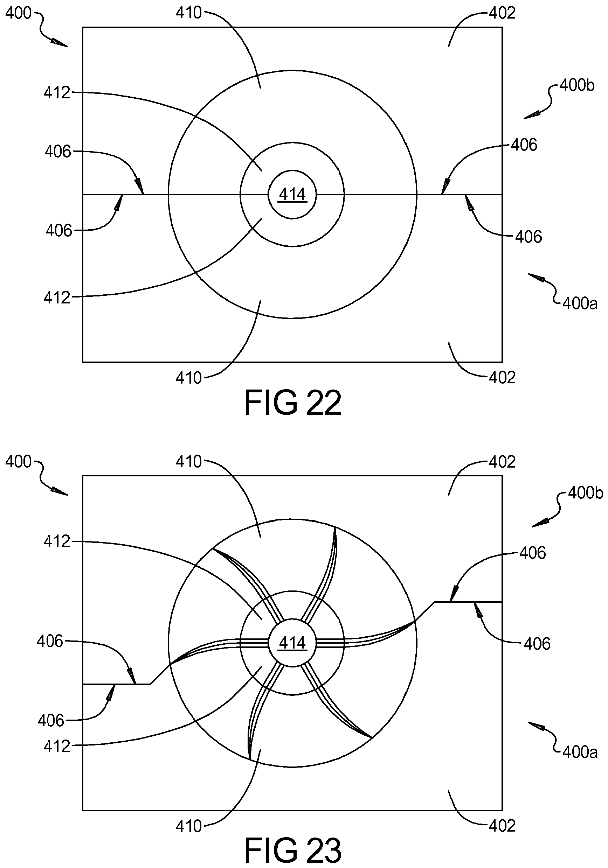

The head **24** is disposed at the second end **32** of the shank **22.** Accordingly, the head **24** is positioned on the shank **22** opposite the tip **26.** The head **24** extends outwardly from the second end **32** of the shank **22** in a transverse plane **46** that is substantially perpendicular to the shank axis **28.** In example illustrated in Figures 1, 2, 3A, and 3B, the head **24** is centered about the shank axis **28;** however, other arrangements are possible where the head **24** is offset relative to the shank axis **28** (Figures 23A-23D). It should be appreciated that while the head **24** generally extends outwardly in the transverse plane **46,** the head **24** is not necessary planar. Instead, the transverse plane **46** is arranged relative to the head **24** such that the transverse plane **46** bisects the head **24.** The head **24** has an anterior side **48** adjacent the second end **32** of the shank **22** and a posterior side **50** opposite the anterior side **48.** The head **24** has a head thickness **54** extending parallel to the shank axis **28** between the anterior and posterior sides **48, 50** of the head **24.** As shown in Figure 1, the head **24** has a head cross-section **56** that extends perpendicularly relative to the shank axis **28** and the head cross-section **56** is bounded by a head periphery **58.** The head cross-section **56** has a circular shape in the examples shown in Figures 1, 2, 3A, and 3B. However, the head **24** may be formed in various different shapes and sizes. By way of example and without limitation, the head cross-section **56** may alternatively have the shape of an oval, a triangle, a square, a rectangle, a hexagon, or an octagon. The head periphery **58** defines a head width **60** that is larger than the shank diameter **38.** Where the head cross-section **56** has a circular shape, the head width **60** equals a diameter of the head **24.** The head periphery **58** generally extends between the anterior and posterior sides **48, 50** of the head **24** in a direction that is substantially parallel to the shank axis **28.** In the examples illustrated in Figures 1, 2, 3A, and 3B, the head periphery **58** has a cylindrical shape. Notwithstanding these examples, the head periphery **58** may have a shape other than that of a cylinder.

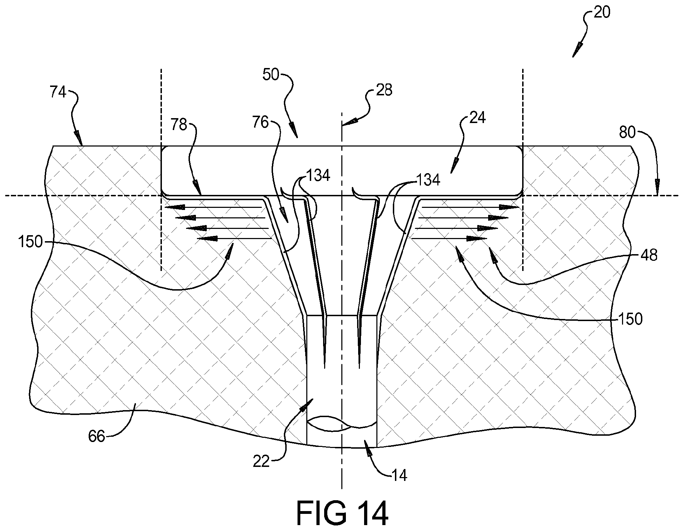

The posterior side **50** of the head **24** may have a variety of different shapes. For example and without limitation, the posterior side **50** of the head **24** may have a planar shape or a domed shape. The posterior side **50** of the head **24** may be configured to be driven by a tool (not shown) for example, a hammer. Generally, such a hammer may be swung into contact with the posterior side **50** of the head **24** in order to drive the tip **26** and subsequently the shank **22** into a substrate material **66** (shown in Figure 14).

The anterior side **48** of the head **24** includes an exposed area **72** that is outward of the shank **22.** The exposed area **72** is thus configured for contact with a first surface **74** (shown in Figure 14) of the substrate material **66.** The anterior side **48** of the head **24** includes a convergent transition portion **76** disposed between the shank **22** and the head periphery **58.** The convergent transition portion **76** extends continuously about the second end **32** of the shank **22** without interruption. In the examples illustrated in Figures 1, 2, 3A, and 3B, where the shank cross-section **38** is circular, the convergent transition portion **76** circumscribes the second end **32** of the shank **22.** The convergent transition portion **76** is spaced inward of the head periphery **58** to define a bearing surface **78.** Accordingly, the bearing surface **78** is disposed between the convergent transition portion **76** and the head periphery **58.** As such, the bearing surface **78** is located within the exposed area **72** on the anterior side **48** of the head **24.** Due to its location within the exposed area **72,** the bearing surface **78** is configured for contact with the first surface **74** of the substrate material **66.** Although other geometries are possible, the bearing surface **78** illustrated in Figures 1, 2, 3A, and 3B has a planar, ring-like shape.

The bearing surface **78** defines a reference plane **80** that is substantially parallel to the transverse plane **46** and that is substantially perpendicular to the shank axis **28.** In configurations where the bearing surface **78** is planar and perpendicular to the shank axis **28,** the reference plane **80** extends along the bearing surface **78.** In configurations where the bearing surface **78** is non-planar and/or is not perpendicular to the shank axis **28,** the reference plane **80** is tangential to the bearing surface **78.** In other words, the reference plane **80** touches the bearing surface **78** at points that are most distant from the posterior side **50** (i.e. points that are closest to the first end **30** of the shank **22).** Depending on the geometry of the head **24,** the reference plane **80,** as defined by the bearing surface **78,** may be spaced from the transverse plane **46** or may be co-extensive with the transverse plane **46.**

As best seen in Figure 3A, the bearing surface **78** extends between an outer radius edge **82** and an inner radius edge **84.** The outer radius edge **82** is disposed between the bearing surface **78** and the head periphery **58** meanwhile the inner radius edge **84** is disposed between the bearing surface **78** and the convergent transition portion **76.** The outer radius edge **82** and the inner radius edge **84** provide round, gradual transitions between the head periphery **58,** the bearing surface **78,** and the convergent transition portion **76.** In particular, the outer radius edge **82** helps prevent surface fibers at the first surface **74** of the substrate material **66** from becoming cut as the bearing surface **78** is driven into the substrate material **66.** Moving sequentially in a first direction **86** that extends along the bearing surface **78** and that points radially inwardly towards the shank axis **28,** the head periphery **58,** the outer radius edge **82,** the bearing surface **78,** the inner radius edge **84,** the convergent transition portion **76,** and the exterior surface **34** of the shank **22** are concentrically arranged in the example shown in Figures 1, 2, 3A, and 3B.

The convergent transition portion **76** extends between a large end **102** and a small end **104** to define a convergent transition portion reference line **106.** The large end **102** of the convergent transition portion **76** is disposed adjacent the inner radius edge **84** of the bearing surface **78** and the small end **104** is disposed along the second end **32** of the shank **22.** The convergent transition portion **76** has an outer surface **108** that extends between the large end **102** and the small end **104.** The convergent transition portion reference line **106** intersects the shank axis **28** at an angle **110** and at a location **112** that is disposed between the first and second ends **30, 32** of the shank **22.** The angle **110** that is formed between the convergent transition portion reference line **106** and the shank axis **28** ranges from 12.5 degrees to 32.5 degrees. As a result, the outer surface **108** of the convergent transition portion **76** in Figures 1, 2, 3A, and 3B has a frustoconical shape. It should be appreciated that angle **110** is measured relative to the shank axis **28.** The convergent transition portion **76** is symmetrical about the shank axis **28.** Therefore, angle **110** represents half of angle **W,** which is measure between one side of the convergent transition portion **76** and an opposite side of the convergent transition portion **76.** Accordingly, when angle **110** ranges from 12.5 degrees to 32.5 degrees, angle **W** ranges from 25 degrees to 65 degrees. Testing has revealed that it is critical for angle **110** to fall within the 12.5 to 32.5 degree range. When angle **110** is less than 12.5 degrees, the convergent transition portion **76** does not displace enough substrate material **66** to consistently center the head **24** relative to a hole **H** (shown in Figure 14) formed in the substrate material **66** by the tip **26** and the shank **22.** When angle **110** is greater than 32.5 degrees, the convergent transition portion **76** displaces too much substrate material **66** to consistently center the head **24** relative to the hole **H.** Also, the convergent transition portion **76** displaces too much substrate material **66** making it difficult to drive the head **24** into the substrate material **66** to a position where the posterior side **50** is flush with the first surface **74** of the substrate material **66.**

Still referring to Figures 1, 2, 3A, and 3B, the large end **102** of the convergent transition portion **76** has a circular shape and a large end diameter **114.** Similarly, the small end **104** of the convergent transition portion **76** has a circular shape and a small end diameter **116.** The large end diameter **114** is larger than the small end diameter **116** and the small end diameter **116** is equal to the shank diameter **38.** Testing has shown that it is critical for the large end diameter **114** to be 1.25 to 2.05 times larger than the shank diameter **38** (and thus the small end diameter **116).** When the large end diameter **114** is less than 1.25 times larger than the shank diameter **38,** then the head **24** is more prone to snap off when the enlarged head fastener device **20** is subjected to destructive separation pull-through forces, such as during high wind storms. When the large end diameter **114** is more than 2.05 times larger than the shank diameter **38,** then the convergent transition portion **76** displaces too much substrate material **66** to consistently center the head **24** relative to the hole **H** and it becomes difficult to drive the head **24** into the substrate material **66** to a position where the posterior side **50** is flush with the first surface **74** of the substrate material **66.**

The convergent transition portion **76** also has an axial length **118** that is measurable between the large end **102** and the small end **104** of the convergent transition portion **76** along a second direction **120** that is parallel to the shank axis **28.** Testing has shown that it is critical for the axial length **118** to be 0.55 to 1.75 times larger than the shank diameter **38.** When the axial length **118** is less than 0.55 times larger than the shank diameter **38,** then the head **24** is more prone to snap off when the enlarged head fastener device **20** is subjected to destructive separation pull-through forces, such as during high wind storms. When the axial length **118** is more than 1.75 times larger than the shank diameter **38,** then the convergent transition portion **76** displaces too much substrate material **66** to consistently center the head **24** relative to the hole **H** and it becomes difficult to drive the head **24** into the substrate material **66** to a position where the posterior side **50** is flush with the first surface **74** of the substrate material **66.**

As best seen in Figure 3A, the bearing surface **78** has a bearing surface area **122** that is bounded by said outer radius edge **82** and said inner radius edge **84.** Testing has shown that it is critical for the bearing surface area **122** to be at least 9 times larger than the shank cross-section **36.** If the bearing surface area **122** is less than 9 times larger than the shank cross-section **36,** then the bearing surface **78** can apply excessive compressive load bearing pressure on the substrate material **66,** which can cause the head **24** to pull through the substrate material **66.**

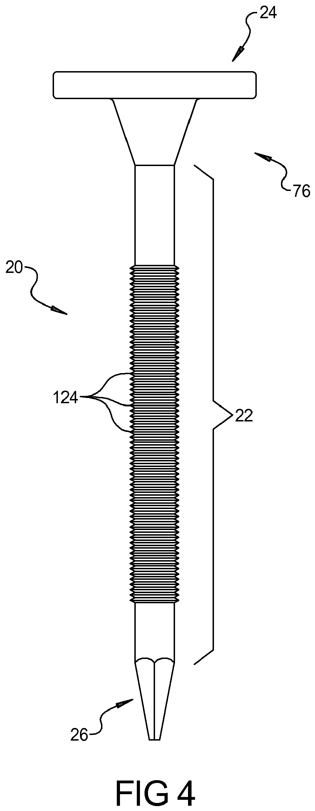

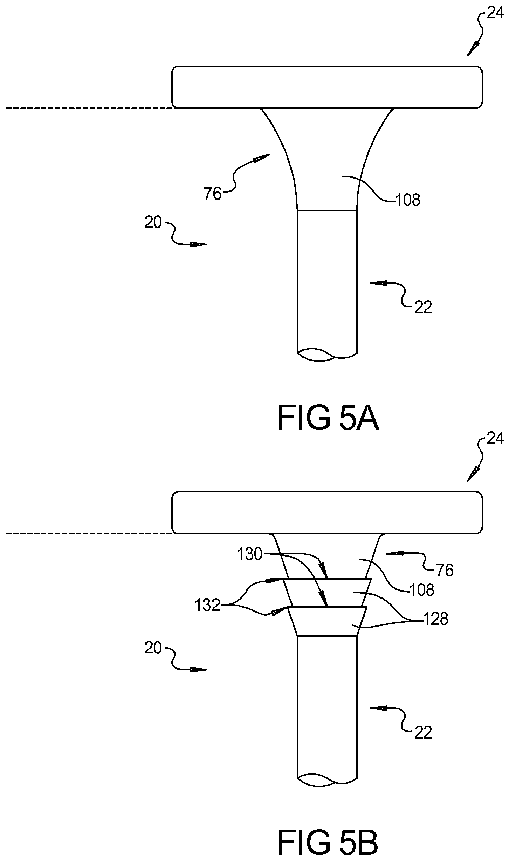

With reference to Figures 4, 5A, and 5B which are provided for illustrative purposes only, variations of the enlarged head fastener device **20** which do not form part of the invention are shown where the exterior surface **34** of the shank **22** and the outer surface **108** of the convergent transition portion **76** have been modified. Figure 4 illustrates the enlarged head fastener device **20** where the shank **22** is provided with optional retention features **124** in the form of annular ribs that extend about and protrude from the exterior surface **34** of the shank **22.** The retention features **124** engage the substrate material **66** adjacent the hole **H** to more securely anchor the shank **22** to the substrate material **66.** In Figure 5A, the outer surface **108** of the convergent transition portion **76** is curved moving from the large end **102** to the small end **104** of convergent transition portion **76.** Accordingly, the convergent transition portion **76** is shaped like a parabolic frustum. In Figure 5B, the outer surface **108** of the convergent transition portion **76** may include one or more teeth **128** that are provided for engagement with the substrate material **66.** Each of the one or more teeth **128** may have an annular shape and an outside diameter **130.** The outside diameters **130** of the one or more teeth **128** may increase moving from the small end **104** of the convergent transition portion **76** to the large end **102** of the convergent transition portion **76** such that the convergent transition portion **76** gets progressively wider moving from the small end **104** of the convergent transition portion **76** to the large end **102** of the convergent transition portion **76.** Each of the one or more teeth **128** may have ramp-like profile that tapers to a sharp edge **132.** The sharp edge **132** is configured to bite into the hole **H** in the substrate material **66** to help retain the enlarged head fastener device **20** in the hole **H** and prevent the enlarged head fastener device **20** from backing out of the substrate material **66.** In accordance with this configuration, the convergent transition portion reference line **106** generally intersects the sharp edge **132** of each of the one or more teeth **128.** The one or more teeth **128** may extend along all or part of the outer surface **108** of the convergent transition portion **76** and thus may be disposed above, below, or above and below the reference plane **80** of the bearing surface **78.** Apart from the above noted distinctions, the construction of the enlarged head fastener device **20** shown in Figures 4, 5A, and 5B is largely the same as the enlarged head fastener device **20** shown in Figures 1, 2, 3A, and 3B.

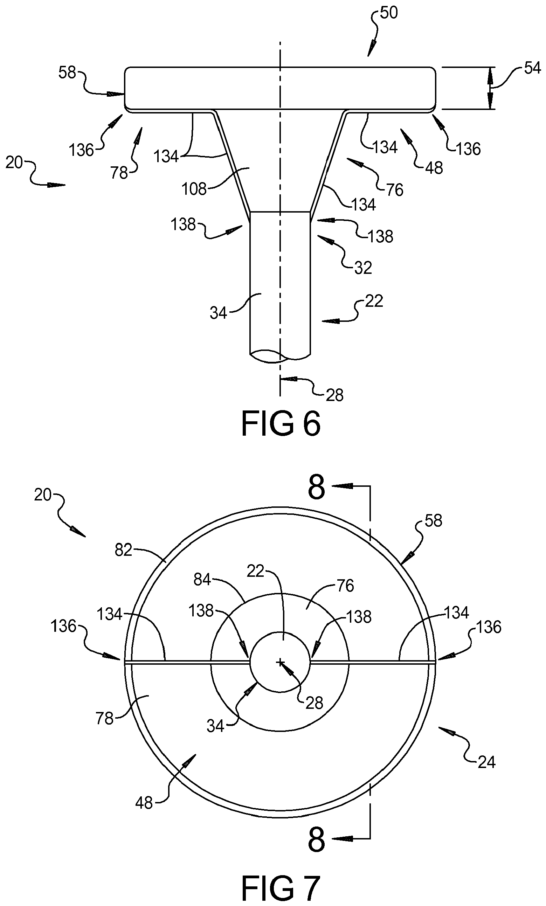

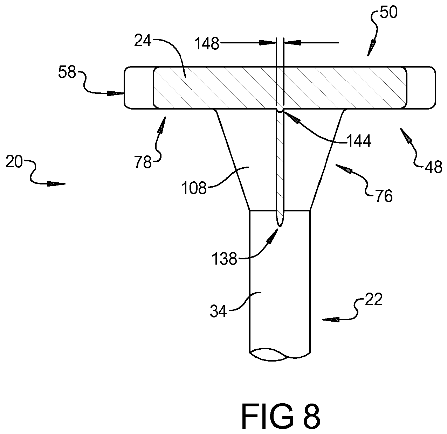

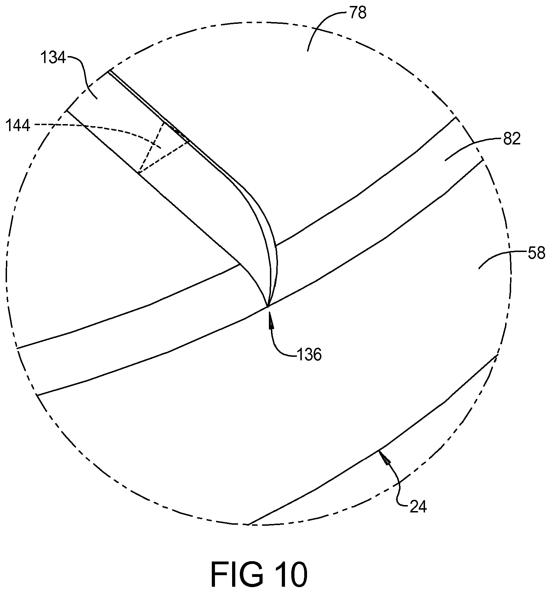

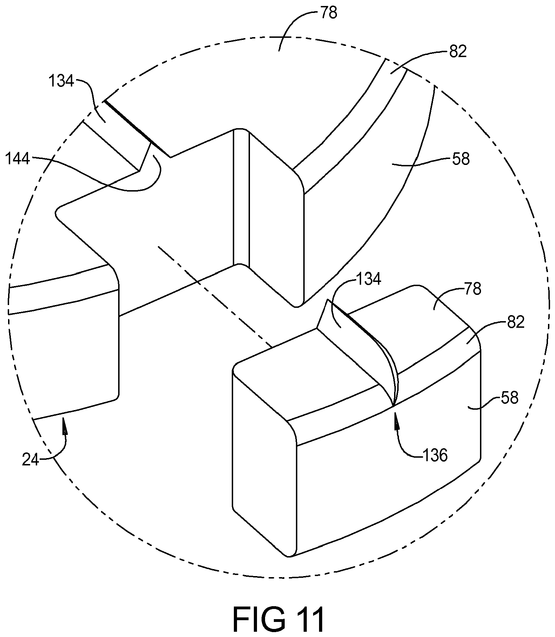

With reference to Figures 6-13, variations of the enlarged head fastener device **20** which form part of the invention are shown where the bearing surface **78,** the outer surface **108** of the convergent transition portion **76,** and the exterior surface **34** of the shank **22** have been modified. As shown throughout the several views, one or more ridge formations **134** are disposed on and project from the anterior side **48** of the head **24.** Each one of the ridge formations **134** extends continuously between an outboard end **136** that is positioned on the anterior side **48** of the head **24** at a location that is adjacent the head periphery **58** and an inboard end **138** that is positioned on the exterior surface **34** of the shank **22** at a location that is adjacent the second end **32** of the shank **22.** Accordingly, each one of the ridge formations **134** extends along part of the exterior surface **34** of the shank **22,** across the outer surface **108** of the convergent transition portion **76,** and across the bearing surface **78** and to the head periphery **58.** Where the enlarged head fastener device **20** is positioned with the shank axis **28** extending vertically (Figure 6), the ridge formations **134** generally project downwardly from the bearing surface **78** and radially outwardly from the outer surface **108** of the convergent transition portion **76.**

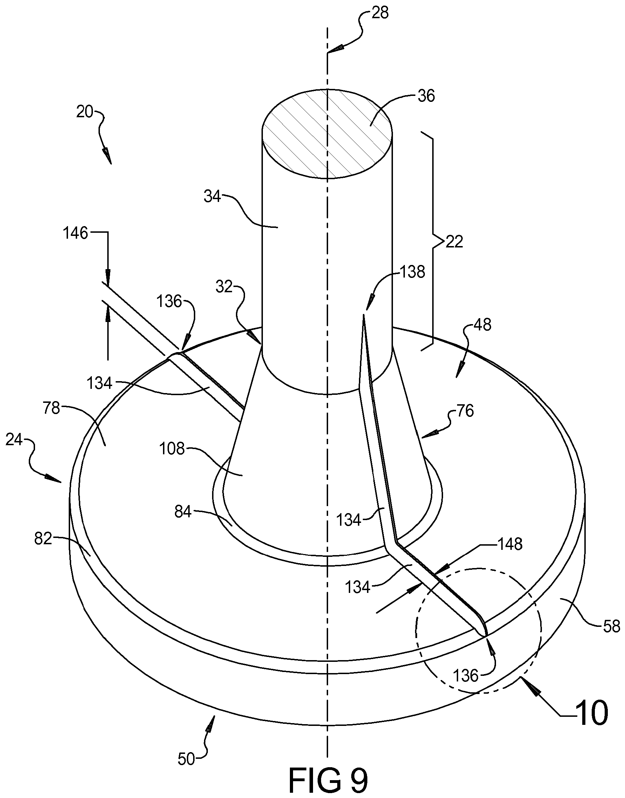

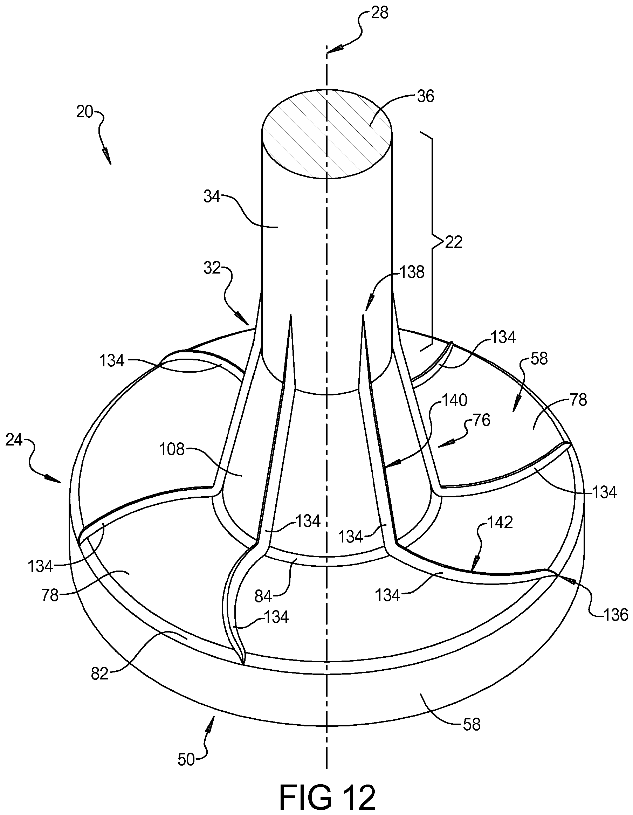

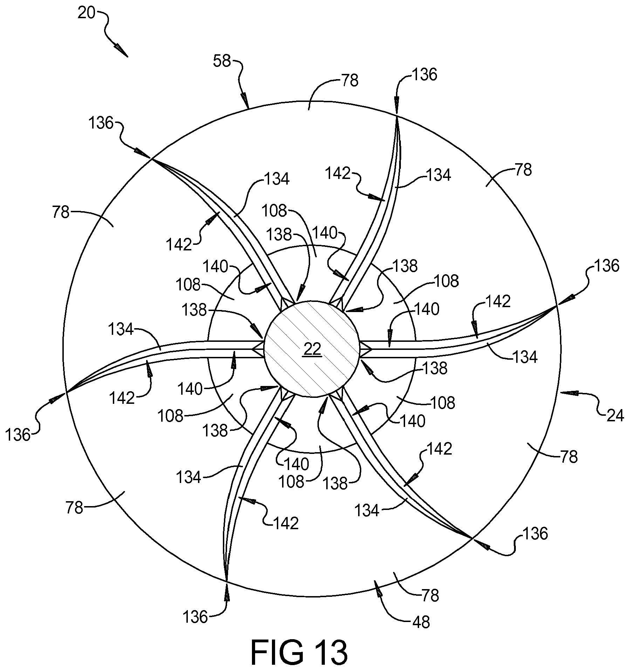

The ridge formations **134** may have a variety of different shapes. In the configuration shown in Figures 6-11, the ridge formations **134** extend linearly across the anterior side **48** of the head **24** between the second end **32** of the shank **22** and the head periphery **58.** By contrast, in Figures 12 and 13, the ridge formations **134** extend across the outer surface **108** of the convergent transition portion **76** in a straight line **140** between the large end **102** and the small end **104** of the convergent transition portion **76** while the ridge formations **134** extend across the bearing surface **78** in a curved line **142** between the inner radius edge **84** and the outer radius edge **82.** This results in the ridge formations **134** forming a spiral-like pattern across the bearing surface **78.** Each of the ridge formations **134** also has a cross-sectional profile **144,** a ridge height **146,** and a ridge width **148.** In the configuration shown in Figures 6-8, each of the ridge formations **134** is a round reinforcement rib where the cross-sectional profile **144** has a semi-circular or rounded shape. In the configuration shown in Figures 9-11, each of the ridge formations **134** is a peaked reinforcement rib where the cross-sectional profile **144** has a triangular shape.

As shown in Figures 6-13, the enlarged head fastener device **20** may include multiple ridge formations **134** that are evenly spaced about the anterior side **48** of the head **24.** In the configuration shown in Figures 6-11, the enlarged head fastener device **20** includes two ridge formations **134** that are disposed 180 degrees apart from one another relative to the shank axis **28.** In the configuration shown in Figures 12 and 13, the enlarged head fastener device **20** includes six ridge formations **134** that are disposed 60 degrees apart from one another relative to the shank axis **28.** The ridge formations **134** reinforce the head **24** of the enlarged head fastener device **20** by resisting head deformation and preventing the head **24** from inverting when the enlarged head fastener device **20** is subjected to destructive pull-through forces. Accordingly, the head thickness **54** may actually be reduced while at the same time improving the structural integrity of the head **24.** The ridge formations **134** therefore can be used to provide thinner head thicknesses **54** than would otherwise be possible without the ridge formations **134.** The presence of the ridge formations **134** also hinders the ability of surface fibers in the substrate material **66** to slip past one another by forming concentrated lines of high compression **150** along the first surface **74** of the substrate material **66.** These concentrated lines of high compression **150** in the substrate material **66** are positioned in the substrate material **66** underneath the ridge formations **134** and constrain surface fibers disposed in the substrate material **66** at locations adjacent the concentrated lines of high compression **150** from slipping past one another in a pull-through scenario. Thus, the ridge formations **134** increase the pull-through resistance of the enlarged head fastener device **20** in a number of different ways. Apart from the above noted distinctions, the construction of the enlarged head fastener device **20** shown in Figures 6-13 is largely the same as the enlarged head fastener device **20** shown in Figures 1, 2, 3A, and 3B.

With reference to Figures 14, the shank **22** and the head **24** of the compression indentation fastener device **20** are movable together between a first impacted position (not shown) and a second impacted position (shown in Figure 14). It should be appreciated that any number of intermediate positions are possible between the first and second impacted positions. In both of the first and second impacted positions, the shank **22** is disposed in hole H in the substrate material **66,** where the shank **22** has entered the substrate material **66** from the first surface **74.** The hole **H** in the substrate material **66** may be created prior to insertion of the shank **22** into the substrate material **66** or alternatively may be created by the tip **26** of the shank **22** when the tip **26** enters and moved through the substrate material **66.** In the first impacted position, the reference plane **80** of the bearing surface **78** is aligned with the first surface **74** of the substrate material **66** such that the bearing surface **78** sits flush in contact with the first surface **74** of the substrate material **66.** Thus, the head **24** has not yet been driven into the substrate material **66** when the enlarged head fastener device **20** is in the first impacted position. In the second impacted position, which is shown in Figure 14, the head **24** has been driven completely in the substrate material **66.** In this position, the posterior side **50** of the head **24** is aligned with the first surface **74** of the substrate material **66** such that the posterior side **50** of the head **24** is flush with the first surface **74** of the substrate material **66.**

The head **24** is made of a rigid material that resists deformation when the shank **22** and the head **24** of the compression indentation fastener device **20** move together from the first impacted position to the second impacted position. The substrate material **66** is softer than the rigid material of the head **24,** is a solid as opposed to a liquid, gas, gel, or slurry, and has the geometric form of a board or a sheet. The substrate material **66** may be a fibrous material and may be made of wood or a wood-like material. For example, the substrate material **66** may be selected from a group consisting of: lumber, siding, plywood, fiberboard, and oriented strand board. It should also be appreciated that the substrate material **66** may be comprised of multiple, stacked boards or sheets, including by non-limiting example, lumber, siding, plywood, fiberboard, and oriented strand board. By virtue of the relative hardness of the rigid material forming the head **24** in comparison to the softer substrate material **66,** the substrate material **66** yields to the bearing surface **78** and the convergent transition portion **76** as the head **24** is driven into the substrate material **66** towards the second impacted position. As such, the convergent transition portion **76** displaces some of the substrate material **66** surrounding the hole **H,** strengthening the substrate material **66** to increase pull-through resistance.

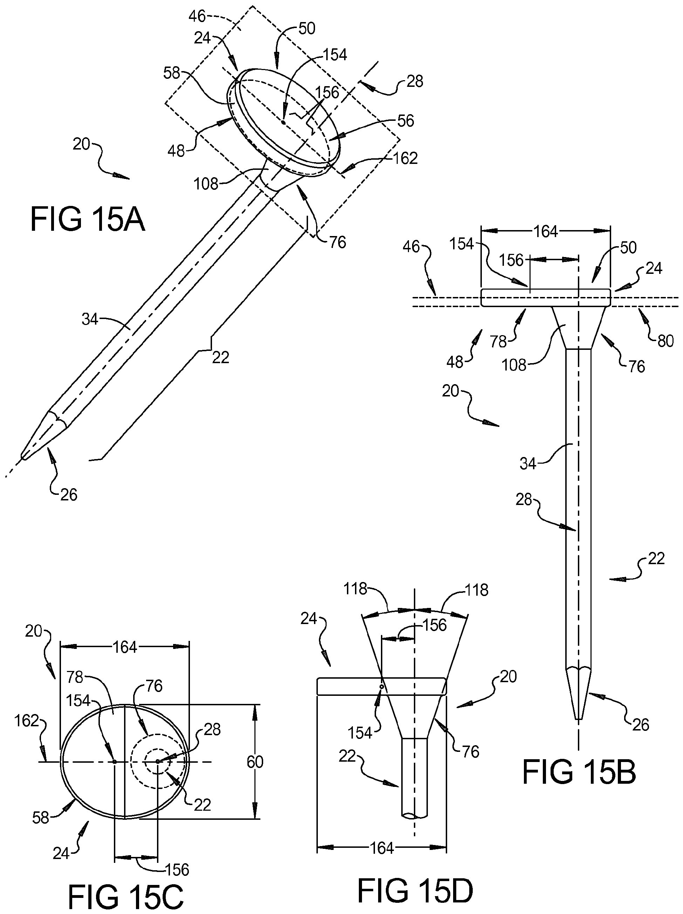

Referring to Figures 15A-D which are provided for illustrative purposes only, another alternative configuration of the enlarged head fastener device **20** which does not form part of the invention is illustrated where the head **24** is offset relative to the second end **32** of the shank **22.** As such, this configuration is particularly well suited to collated power driven delivery systems, including by way of non-limiting example, nail-guns. The head **24** has a midpoint **154** that is centrally located along the head cross-section **56** and relative to the head periphery **58.** The midpoint **154** is disposed in the transverse plane **46** and is spaced laterally from the shank axis **28** by an offset distance **156.** Therefore, it should be appreciated that the head **24** extends further to one side of the shank **22** at greater offset distances **156.** The head **24** of the enlarged head fastener device **20** may be elongated in the transverse plane **46.** The head **24** defines a lateral axis **162** extending in the transverse plane **46** where the lateral axis **162** passes through the midpoint **154** of the head **24** and interests the shank axis **28.** The head **24** has a head length **164** measured parallel to the lateral axis **162** and the head width **60** is measured perpendicular to the lateral axis **162.** The head **24** is elongated along the lateral axis **162** such that the head length **164** is greater than the head width **60.** Apart from the above noted distinctions, the construction of the enlarged head fastener device **20** shown in Figures 15A-D is largely the same as the enlarged head fastener device **20** shown in Figures 1, 2, 3A, and 3B.

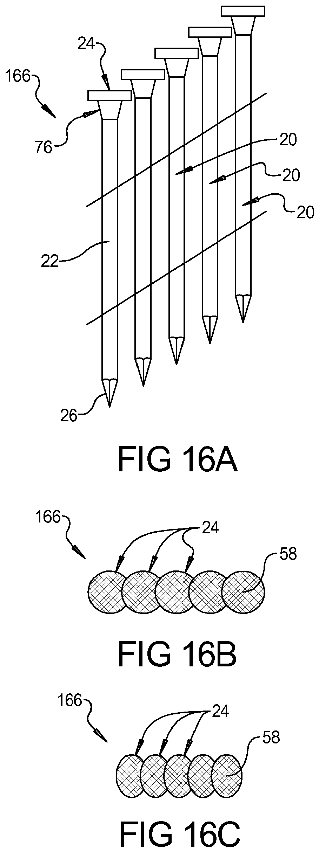

Figures 16A-C which are provided for illustrative purposes only illustrate one possible application of the enlarged head fastener device **20** of Figure 1 adapted for use in a collated power driven delivery system such as a nail-gun. In Figures 16A-C, several of the enlarged head fastener devices **20** have been collated and arranged in a string of fasteners **166.** In use, this string of fasteners **166** is feed into the collated power driven delivery system. As can be seen in Figures 16B and 16C, the heads **24** of the enlarged head fastener devices 20 in the string of fasteners **166** may partially overlap with one another and may have a circular or oval shaped head cross-section **56.**

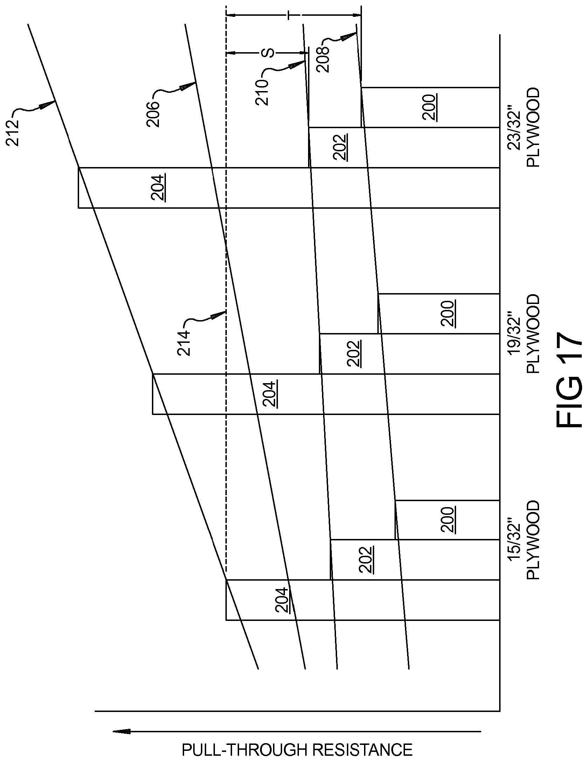

Figure 17 is a plot comparing the ultimate yield pull-through resistance of the enlarged head fastener device **20** illustrated in Figures 1, 2, 3A and 3B to the ultimate yield pull-through resistance of conventional small-head fasteners and conventional enlarged head fasteners. The data illustrated was compiled from third-party independent testing performed by NTA, Inc. In Figure 17, the ultimate yield pull-though resistance of a small-head fastener is illustrated by bar **200,** the ultimate yield pull-through resistance of a conventional enlarged head fastener is illustrated by bar **202,** and the ultimate yield pull-through resistance of an enlarged head fastener device **20** constructed in accordance with the present invention is illustrated by bar **204.** Each fastener was tested in three different thicknesses of plywood substrate material **66,** including 15/32 of an inch, 19/32 of an inch, and 23/32 of an inch. The plot shows that the ultimate yield pull-through resistance of the conventional enlarged head fastener was higher than the ultimate yield pull-through resistance of the small-head fastener for each thickness of substrate material **66** tested. The plot also shows that the ultimate yield pull-through resistance of the enlarged head fastener device **20** described herein was higher than that of both the small-head fastener and the conventional enlarged head fastener for each thickness of substrate material **66** tested. These test results confirm and quantify the improved ultimate yield pull-through resistance of the enlarged head fastener device **20** described herein.

As one would expect, the pull-through resistance of each fastener increased as the thickness of the substrate material **66** was increased. However, somewhat unexpectedly, the pull-through resistance of the small-head fastener and the conventional enlarged head fastener did not increase proportionally with the increase in thickness of the substrate material **66,** but increased at a lesser rate. This is likely due to the fact that the planar geometry of the small-head fastener and the conventional enlarged head fastener cuts and/or ruptures the surface fibers of the substrate material **66** once a certain amount of force is applied to the fastener.

In Figure 17, a first line **206** depicting the increasing thickness of the substrate material **66** is illustrated for reference purposes. A second line **208** depicts the increasing values of ultimate yield pull-through resistance of the small-head fastener and a third line **210** depicts the increasing values of ultimate yield pull-through resistance of the conventional enlarged head fasteners. Finally, the ultimate yield pull-through resistance of the enlarged head fastener device **20** described herein is depicted by a fourth line **212.** The second and third lines **208, 210,** which correspond to the pull-through performance of the small-head fasteners and the conventional enlarged head fasteners, have slopes that are substantially the same and less than a slope of the first line **206.** In other words, the second and third lines **208, 210** are substantially parallel to one another and the second and third lines **208, 210** are less steep than the first line **206,** which corresponds to the thickness increase in the substrate material **66.** This means that even though the values for ultimate yield pull-through resistance of the conventional enlarged head fastener was greater than the values for ultimate yield pull-through resistance of the small-head fastener, both of the small-head fasteners and the conventional enlarged head fasteners performed similarly to one another in response to increasing the thickness of the substrate material **66.** This also means that the increase in the thickness of the substrate material **66** outpaced the values for ultimate yield pull-through resistance of the small-head fasteners and the conventional enlarged head fasteners. In other words, if the thickness of the substrate material **66** is doubled, the ultimate yield pull-through resistance of the small-head fasteners and the conventional enlarged head fasteners would not double, but would increase to a lesser extent.

By contrast, the fourth line **212,** which corresponds to the pull-through performance of the enlarged head fastener device **20** described herein, has a slope that is greater than the slope of the first line **206.** This means that the values for ultimate yield pull-through resistance of the disclosed enlarged head fastener device **20** outpaced the increase in the thickness of the substrate material **66.** In other words, if the thickness of the substrate material **66** is doubled, the ultimate yield pull-through resistance of the disclosed enlarged head fastener device **20** would more than double.

An additional performance advantage is illustrated with reference to horizontal datum line **214,** which corresponds to the lowest ultimate yield pull-through resistance value of the disclosed enlarged head fastener device 20 (i.e. the value for the 15/32 of an inch thickness). The highest ultimate yield pull-through resistance value achieved by the conventional enlarged head fastener is less than the horizontal datum line **214,** and thus the lowest ultimate yield pull-through resistance value of the disclosed enlarged head fastener device **20,** by an offset value **S.** In similar fashion, the highest ultimate yield pull-through value achieved by the small-head fastener is less than the horizontal datum line **214,** and thus the lowest ultimate yield pull-through resistance value of the disclosed enlarged head fastener device **20,** by value **T.** The benefits of the enlarged head fastener device **20** described herein are therefore evident in the plot shown in Figure 17 because a higher ultimate yield pull-through resistance value can be achieved with the disclosed enlarged head fastener device **20** in the thinner 15/32 of an inch thick substrate material **66** than can be achieved with either of the small-head fastener or the conventional enlarged head fastener in the thicker 23/32 of an inch thick substrate material **66.** Therefore, cost savings can be realized by using a thinner, more cost effective substrate material **66** while still realizing improved pull-through resistance. Accordingly, the enlarged head fastener device **20** described above can significantly improve the structural integrity of various structures, including without limitation, wood frame buildings.

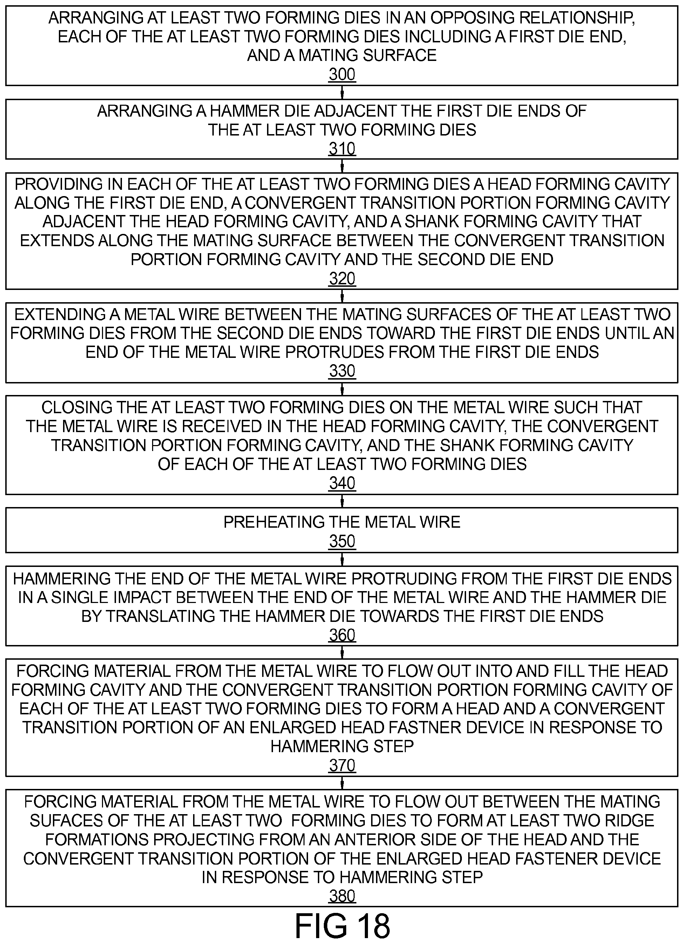

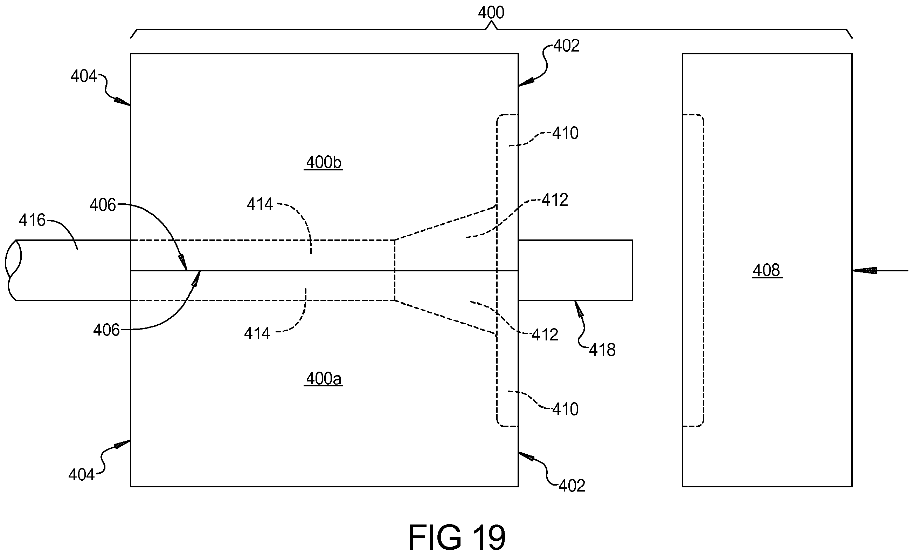

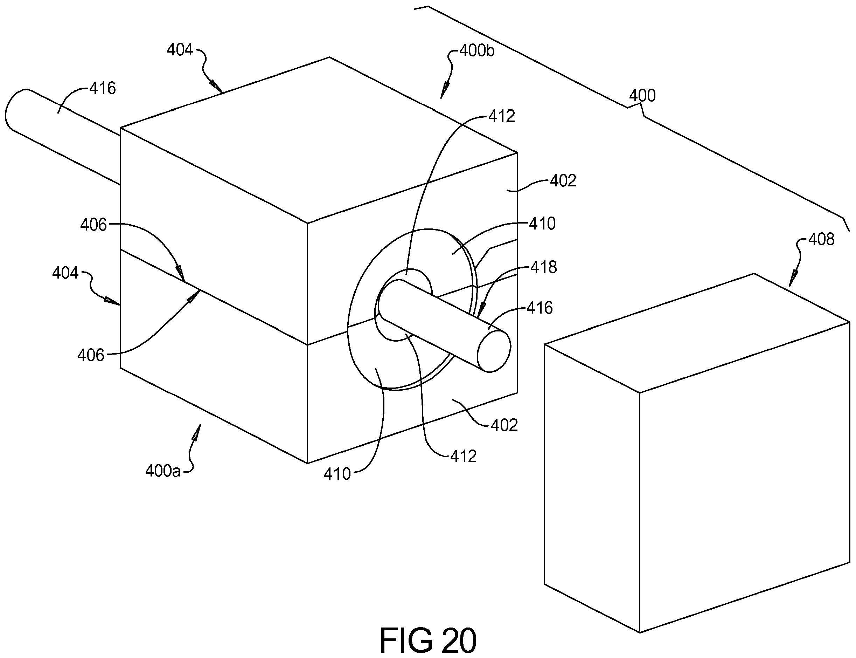

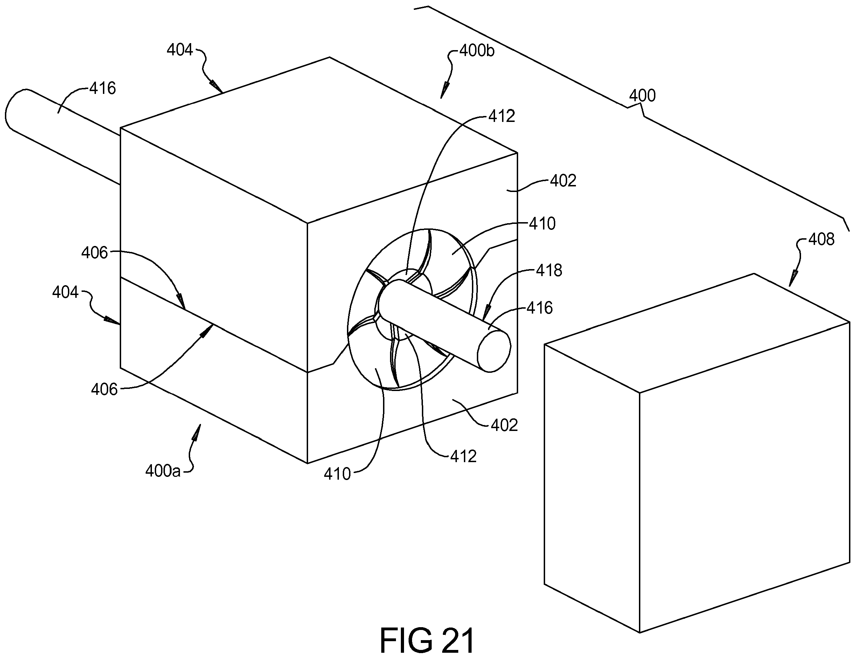

Now referring to Figure 18, a method of manufacturing the enlarged head fastener device **20** described above is illustrated. In addition to the flowchart in Figure 18 that illustrates the steps of the method described herein, further reference is made to Figures 19-23, which illustrate the machinery used in performing the method, which includes a die assembly **400.** The method includes the step illustrated by block **300** of arranging at least two forming dies **400a, 400b** in an opposing relationship. Each of the at least two forming dies **400a, 400b** includes a first die end **402,** a second die end **404,** and a mating surface **406** that extends between the first and second die ends **402, 404.** The mating surfaces **406** of the at least two forming dies **400a, 400b** oppose one another. The method also includes the steps illustrated by blocks **310** and **320** of arranging a hammer die **408** adjacent the first die ends **402** of the at least two forming dies **400a, 400b** and providing in each of the at least two forming dies **400a, 400b** a head forming cavity **410,** a convergent transition portion forming cavity **412,** and a shank forming cavity **414.** More specifically, the head forming cavities **410** are provided along the first die ends **402,** the convergent transition portion forming cavities **412** are provided adjacent the head forming cavities **410,** and the shank forming cavities **414** are provided along the mating surfaces **406** of the at least two forming dies **400a, 400b** between the convergent transition portion forming cavities **412** and the second die ends **404.** The method further includes the steps illustrated by blocks **330** and **340** of extending a metal wire **416** between the mating surfaces **406** of the at least two forming dies **400a, 400b** from the second die ends **404** toward the first die ends **402** until an end **418** of the metal wire **416** protrudes from the first die ends **402** and closing the at least two forming dies **400a, 400b** on the metal wire **416.** In accordance with the closing step illustrated by block **340,** the metal wire **416** is received in the head forming cavity **410,** the convergent transition portion forming cavity **412,** and the shank forming cavity **414** of each of the at least two forming dies **400a, 400b.** Optionally, the method may include the step illustrated by block **350** of preheating the metal wire **416.** If the preheating step illustrated by block **350** is not performed, the metal wire **416** may be subjected to cold forming under the disclosed method. The method additionally includes the steps illustrated by blocks **360** and **370** of hammering the end **418** of the metal wire **416** protruding from the first die ends **402** in a single impact and forcing material from the metal wire **416** to flow out into and fill the head forming cavity **410** and the convergent transition portion forming cavity **412** of each of the at least two forming dies **400a, 400b.** The single impact in the hammering step illustrated by block **360** occurs between the end **418** of the metal wire **416** and the hammer die **408** when the hammer die **408** is translated (i.e. moved or driven) towards the first die ends **402** of the at least two forming dies **400a, 400b.** In accordance with the method, the forcing step illustrated by block **370** forms a head **24** and a convergent transition portion **76** of an enlarged head fastener device **20** in response to the hammering step illustrated by block **360.** The method may further include the step illustrated by block **380** of forcing material from the metal wire **416** to flow out between the mating surfaces **406** of the at least two forming dies **400a, 400b** to form at least two ridge formations **134** projecting from an anterior side **48** of the head **24** and the convergent transition portion **76** of the enlarged head fastener device **20** in response to said hammering step illustrated by block **380.** In accordance with the forcing step illustrated by block **380,** it should be appreciated that the two forming dies **400a, 400b** illustrated in Figures 19 and 20 will produce an enlarged head fastener device **20** having two ridge formations **134** that are spaced 180 degrees apart, like the enlarged head fastener device **20** illustrated in Figures 9-11. On the other hand, it should be appreciated that the two forming dies **400a, 400b** illustrated in Figures 20-23 will produce an enlarged head fastener device **20** having six ridge formations **134** that are spaced 60 degrees apart, like the enlarged head fastener device **20** illustrated in Figures 12 and 13 in response to the performance of the forcing step illustrated by block **380.**

It should be appreciated that although steps **300-380** of the method are described and illustrated herein in a particular order, steps **300-380** may be performed in a different order without departing from the scope of the present invention, except where the order of the steps is otherwise noted.

Obviously, many modifications and variations of the present invention are possible in light of the above teachings and may be practiced otherwise than as specifically described while within the scope of the appended claims. In addition, the reference numerals in the claims are merely for convenience and are not to be read in any way as limiting.

## Claims

1. An enlarged head fastener device (20) having a nail-like arrangement, comprising:
a shank (22) extending along a shank axis (28) and between a first end (30) and a second end (32);
said shank (22) having an exterior surface (34) that extends between said first end (30) and said second end (32) of said shank (22);
a tip (26) disposed at the first end (30) of the shank (22);
a head (24) disposed at said second end (32) of said shank (22), said head (24) extending outwardly from said second end (32) of said shank (22) in a transverse plane (46) that is substantially perpendicular to said shank axis (28) to define a head periphery (58);
said head (24) having an anterior side (48) adjacent said second end (32) of said shank (22) and a posterior side (50) opposite said anterior side (48); and
at least one ridge formation (134) disposed on and projecting from said anterior side (48) of said head (24) for reinforcing said head (24),
**characterised in that**
said at least one ridge formation (134) extends continuously between an outboard end (136) positioned on said anterior side (48) of said head (24) adjacent said head periphery (58) and an inboard end (138) that is closer to said second end (32) of said shank (22) than said outboard end (136),
wherein the inboard end (138) is positioned on the exterior surface (34) of the shank (22) at a location adjacent the second end (32) of said shank (22),
said anterior side (48) of said head (24) includes a bearing surface (78) and a convergent transition portion (76), said bearing surface (78) extending inwardly from an outer radius edge (82) adjacent said head periphery (58) to an inner radius edge (84), said convergent transition portion (76) extending inwardly from a large end (102) adjacent said inner radius edge (84) of said bearing surface (78) to a small end (104) adjacent said second end (32) of said shank (22), said convergent transition portion (76) having an outer surface (108) that extends between said large end (102) and said small end (104), and said at least one ridge formation (134) extending across said outer surface (108) of said convergent transition portion (76),
wherein the bearing surface (78) defines a reference plane (80) that is substantially parallel to the transverse plane (46);
wherein the shank (22) has a smooth outer surface along its full longitudinal extension from the first end (30) until the inboard end (138) adjacent the second end (32) of said shank (22).

2. The enlarged head fastener device (20) set forth in claim 1 wherein said at least one ridge formation (134) extends across said outer surface (108) of said convergent transition portion (76) in a straight line between said large end (102) and said small end (104) and wherein said at least one ridge formation (134) extends across said bearing surface (78) in a curved line between said inner radius edge (84) and said outer radius edge (82).

3. The enlarged head fastener device (20) set forth in claim 1 wherein said at least one ridge formation (134) extends linearly across said anterior side (48) of said head (24) between said second end (32) of said shank (22) and said head periphery (58).

4. The enlarged head fastener device (20) set forth in claim 1 wherein said at least one ridge formation (134) is a peaked reinforcement rib and has a cross-sectional profile with a triangular shape.

5. The enlarged head fastener device (20) set forth in claim 1 wherein said at least one ridge formation (134) is a round reinforcement rib and has a cross-sectional profile with a semi-circular shape.

6. The enlarged head fastener device (20) set forth in claim 1 wherein said at least one ridge formation (134) includes multiple ridge formations that are evenly spaced about said anterior side (48) of said head (24).

## Patentansprüche

1. Befestigungseinrichtung (20) mit vergrößertem Kopf und einer nagelähnlichen Anordnung, die Folgendes umfasst:
einen Schaft (22), der sich entlang einer Schaftachse (28) und zwischen einem ersten Ende (30) und einem zweiten Ende (32) erstreckt;
wobei der Schaft (22) eine Außenfläche (34) aufweist, die sich zwischen dem ersten Ende (30) und dem zweiten Ende (32) des Schaftes (22) erstreckt;
eine Spitze (26), die an dem ersten Ende (30) des Schafts (22) angeordnet ist;
einen Kopf (24), der an dem zweiten Ende (32) des Schafts (22) angeordnet ist,
wobei sich der Kopf (24) von dem zweiten Ende (32) des Schafts (22) in einer Transversalebene (46) nach außen erstreckt, die im Wesentlichen senkrecht zu der Schaftachse (28) ist, um einen Kopfumfang (58) zu definieren;
wobei der Kopf (24) eine dem zweiten Ende (32) des Schafts (22) benachbarte vordere Seite (48) und eine der vorderen Seite (48) gegenüberliegende hintere Seite (50) aufweist; und
mindestens eine Rippenformation (134), die an der vorderen Seite (48) des Kopfes (24) angeordnet ist und von dieser vorsteht, um den Kopf (24) zu verstärken,
**dadurch gekennzeichnet,**
**dass** sich die mindestens eine Rippenformation (134) kontinuierlich zwischen einem äußeren Ende (136), das auf der der vorderen Seite (48) des Kopfes (24) angrenzend an den Kopfumfang (58) und einem inneren Ende (138), das näher an dem zweiten Ende (32) des Schaftes (22) liegt als das äußere Ende (136), erstreckt,
wobei das innere Ende (138) an der Außenfläche (34) des Schafts (22) an einer Stelle benachbart zu dem zweiten Ende (32) des Schafts (22) angeordnet ist,
wobei die vordere Seite (48) des Kopfes (24) eine Lagerfläche (78) und einen konvergierenden Übergangsabschnitt (76) aufweist, wobei sich die Lagerfläche (78) von einem äußeren Radiusrand (82), der an den Kopfumfang (58) angrenzt, nach innen zu einem inneren Radiusrand (84) erstreckt, wobei sich der konvergierende Übergangsabschnitt (76) von einem großen Ende (102), das an den inneren Radiusrand (84) der Lagerfläche (78) angrenzt, nach innen zu einem kleinen Ende (104) erstreckt, das an das zweite Ende (32) des Schaftes (22) angrenzt, wobei der konvergierende Abschnitt (76) eine Außenfläche (108) aufweist, die sich zwischen dem großen Ende (102) und dem kleinen Ende (104) erstreckt, und wobei sich die mindestens eine Rippenformation (134) über die Außenfläche (108) des konvergierenden Abschnitts (76) erstreckt,
wobei die Lagerfläche (78) eine Bezugsebene (80) definiert, die im Wesentlichen parallel zu der Befestigungseinrichtung (20) mit vergrößertem Kopf (46) ist;
wobei der Schaft (22) eine glatte Außenfläche entlang seiner gesamten Längserstreckung von dem ersten Ende (30) bis zu dem inneren Ende (138) benachbart zu dem zweiten Ende (32) des Schafts (22) aufweist.

2. Befestigungseinrichtung (20) mit vergrößertem Kopf nach Anspruch 1, wobei sich die mindestens eine Rippenformation (134) über die Außenfläche (108) des konvergenten Übergangsabschnitts (76) in einer geraden Linie zwischen dem großen Ende (102) und dem kleinen Ende (104) erstreckt, und wobei sich die mindestens eine Rippenformation (134) über die Lagerfläche (78) in einer gekrümmten Linie zwischen dem inneren Radiusrand (84) und dem äußeren Radiusrand (82) erstreckt.

3. Befestigungseinrichtung (20) mit vergrößertem Kopf nach Anspruch 1, wobei sich die mindestens eine Rippenformation (134) linear über die vordere Seite (48) des Kopfes (24) zwischen dem zweiten Ende (32) des Schaftes (22) und dem Kopfumfang (58) erstreckt.

4. Befestigungseinrichtung (20) mit vergrößertem Kopf nach Anspruch 1, wobei die mindestens eine Rippenformation (134) eine spitz zulaufende Verstärkungsrippe ist und ein Querschnittsprofil mit einer dreieckigen Form aufweist.

5. Befestigungseinrichtung (20) mit vergrößertem Kopf nach Anspruch 1, wobei die mindestens eine Rippenformation (134) eine runde Verstärkungsrippe ist und ein halbkreisförmiges Querschnittsprofil aufweist.

6. Befestigungseinrichtung (20) mit vergrößertem Kopf nach Anspruch 1, wobei die mindestens eine Rippenformation (134) mehrere Rippenformationen aufweist, die gleichmäßig um die vordere Seite (48) des Kopfes (24) herum angeordnet sind.

## Revendications

1. Dispositif de fixation à tête agrandie (20) ayant un agencement en forme de clou, comprenant :
une tige (22) s'étendant le long d'un axe de tige (28) et entre une première extrémité (30) et une seconde extrémité (32) ;
ladite tige (22) ayant une surface extérieure (34) qui s'étend entre ladite première extrémité (30) et ladite seconde extrémité (32) de ladite tige (22) ;
une pointe (26) disposée au niveau de la première extrémité (30) de la tige (22) ;
une tête (24) disposée au niveau de ladite seconde extrémité (32) de ladite tige (22), ladite tête (24) s'étendant vers l'extérieur à partir de ladite seconde extrémité (32) de ladite tige (22) dans un plan transversal (46) qui est sensiblement perpendiculaire audit axe de tige (28) afin de définir une périphérie de tête (58) ;
ladite tête (24) ayant un côté antérieur (48) adjacent à ladite seconde extrémité (32) de ladite tige (22) et un côté postérieur (50) opposé audit côté antérieur (48) ; et
au moins une formation de crête (134) disposée sur et faisant saillie dudit côté antérieur (48) de ladite tête (24) pour renforcer ladite tête (24),
**caractérisé en ce que** :
ladite au moins une formation de crête (134) s'étend de manière continue entre une extrémité externe (136) positionnée sur ledit côté antérieur (48) de ladite tête (24) adjacente à ladite périphérie de tête (58) et une extrémité interne (138) qui est plus à proximité de ladite seconde extrémité (32) de ladite tige (22) que ladite extrémité externe (136),
dans lequel l'extrémité interne (138) est positionnée sur la surface extérieure (34) de la tige (22) à un emplacement adjacent à la seconde extrémité (32) de ladite tige (22),
ledit côté antérieur (48) de ladite tête (24) comprend une surface d'appui (78) et une partie de transition convergente (76), ladite surface d'appui (78) s'étendant vers l'intérieur à partir d'un bord arrondi externe (82) adjacent à ladite périphérique de tête (58) jusqu'à un bord arrondi interne (84), ladite partie de transition convergente (76) s'étendant vers l'intérieur à partir d'une grande extrémité (102) adjacente audit bord arrondi interne (84) de ladite surface d'appui (78) jusqu'à une petite extrémité (104) adjacente à ladite seconde extrémité (32) de ladite tige (22), ladite partie de transition convergente (76) ayant une surface externe (108) qui s'étend entre ladite grande extrémité (102) et ladite petite extrémité (104), et ladite au moins une formation de crête (134) s'étendant de part et d'autre de ladite surface externe (108) de ladite partie de transition convergente (76),
dans lequel la surface d'appui (78) définit un plan de référence (80) qui est sensiblement parallèle au plan transversal (46) ;
dans lequel la tige (22) a une surface externe lisse le long de toute son extension longitudinale à partir de la première extrémité (30) jusqu'à l'extrémité interne (138) adjacente à la seconde extrémité (32) de ladite tige (22).

2. Dispositif de fixation à tête agrandie (20) selon la revendication 1, dans lequel ladite au moins une formation de crête (134) s'étend de part et d'autre de ladite surface externe (108) de ladite partie de transition convergente (76) sur une ligne droite entre ladite grande extrémité (102) et ladite petite extrémité (104) et dans lequel ladite au moins une formation de crête (134) s'étend de part et d'autre de ladite surface d'appui (78) sur une ligne incurvée entre ledit bord arrondi interne (84) et ledit bord arrondi externe (82).

3. Dispositif de fixation à tête agrandie (20) selon la revendication 1, dans lequel ladite au moins une formation de crête (134) s'étend de manière linéaire de part et d'autre dudit côté antérieur (48) de ladite tête (24) entre ladite seconde extrémité (32) de ladite tige (22) et ladite périphérie de tête (58).

4. Dispositif de fixation à tête agrandie (20) selon la revendication 1, dans lequel ladite au moins une formation de crête (134) est une nervure de renforcement pointue et a un profil transversal avec une forme triangulaire.

5. Dispositif de fixation à tête agrandie (20) selon la revendication 1, dans lequel ladite au moins une formation de crête (134) est une nervure de renforcement ronde et a un profil transversal avec une forme semicirculaire.

6. Dispositif de fixation à tête agrandie (20) selon la revendication 1, dans lequel ladite au moins une formation de crête (134) comprend plusieurs formations de crête qui sont régulièrement espacées autour dudit côté antérieur (48) de ladite tête (24).
